# EUROPÄISCHE PATENTSCHRIFT

(11) **EP 2 407 043 B1**
(45) Veröffentlichungstag und Bekanntmachung des Hinweises auf die Patenterteilung: **11.05.2016**
(21) Anmeldenummer: 11174112.0
(22) Anmeldetag: 15.07.2011
(51) Int. Cl.: A43D 1/02, G06Q 30/00

(54) **Verfahren zur Auswahl eines an einen Fuß angepassten Schuhs und Anordnungen dafür**
Method for selecting a shoe adapted to a foot and assemblies therefor
Procédé de sélection de chaussures à la bonne pointure et agencements correspondants

(30) Priorität: 16.07.2010 DE 102010027390
(43) Veröffentlichungstag der Anmeldung: 18.01.2012
(73) Patentinhaber: corpus.e AG, 70178 Stuttgart (DE)
(72) Erfinder: Rutschmann, Dirk, 70180 Stuttgart (DE)
(74) Vertreter: Prinz & Partner mbB

(56) Entgegenhaltungen:
- WO-A1-00/69295
- WO-A1-2007/000758
- US-A- 5 339 252
- US-A- 5 515 268
- US-A1- 2007 288 332
- US-A1- 2009 051 683
- US-B1- 6 975 232

## Beschreibung

Die Erfindung betrifft ein Verfahren zur Auswahl eines an einen Fuß angepassten Schuhs und Anordnungen dafür.

Die Internet-basierte Bestellung von Schuhwerk ist ein Geschäftszweig mit rasch wachsender Bedeutung. Zahlreiche On-line Lieferanten wie beispielsweise www.zalando.de oder www.mirapodo.de bieten über ihr web-Portal eine große Auswahl von Straßen-, Sport- und Kinderschuhen an, welche durch Auswahl einer gewünschten Marke und Schuhform sowie der entsprechenden Schuhgröße bestellt werden können. Da dieser Internet-Schuhhandel zwangsläufig ohne Anprobiervorgang abläuft, ist die Wahl der korrekten Passform kritisch.

In der Regel reduzieren sich die Informationen zur Passform auf die Angabe einer Schuhgröße, ggfls. noch mit Attributen wie "schmale", "normale" oder "breite" Fußform. Diese Angaben sind in der Regel nicht trennscharf und von Schuhhersteller zu Schuhhersteller trotz zahlreicher Normungen höchst unterschiedlich.

So hat beispielsweise eine Untersuchung der corpus.e AG, Stuttgart im Auftrag der Sportzeitung Motorpresse GmbH, mit Hilfe von 3D Fußscannern und eines neu entwickelten Innenschuhform-Scanners gezeigt, dass trotz gleicher angegebener Schuhgröße bereits die Fußlängen zwischen den Modellen verschiedener Hersteller sich in Wirklichkeit um bis zu 2 Größen unterscheiden (siehe Zeitschriften RoadBike 4/2009, und Outdoor 10/2009, Verlag Motorpresse Stuttgart).

Dieser Zustand hat dazu geführt, dass die Angabe einer Schuhgröße keine Garantie für eine gute Passform bedeutet.

Die von den meisten on-line Schuhgeschäfte angebotenen Hilfen zum Bestimmen der richtigen Schuhgröße können daher auch nicht zum Ziel führen, denn es wird jeweils nur eine Korrelation zwischen der vom Kunden mehr oder weniger genau bestimmten Fußgröße und der zugehörigen Normschuhgröße hergestellt, das Fachwissen der Schuhverkäuferin ("diese Schuhe fallen etwas klein aus" oder "die sind Ihnen bestimmt zu weit",...) fehlt.

Zu den von den on-line Schuhgeschäften angebotenen Hilfen zählen Größentabellen, welche die vom Kunden selbst durchzuführende Längenmessung (Ferse zu Spitze des großen Zehs) in ein Standard-Schuhgrößen-System umrechnen, diese Tabellen erlauben aber lediglich die Umrechnung der Fußlänge in Millimeter in die Standard-Schuhgrößen nach EURO-, UK- oder US-Norm.

Ferner gibt es Passformtabellen, welche auch die Fußweite und den Wadenumfang berücksichtigen. Die US 6,879,945 B1 der Firma NIKE INC. offenbart die Verwendung ausdruckbarer Fußsohlen-Schablonen, mit welchen der Kunde zu Hause die benötigte Norm-Schuhgröße selbst messen kann.

Bemerkenswert ist auch, dass alle diese derzeitigen Verfahren, die ohnehin immer nur eine Norm-Schuhgröße liefern, lediglich von dem 2D Bild der Fußsohle ausgehen und z.B. nicht die Spannhöhe berücksichtigen.

Es fehlt vollständig die Überprüfung der Passform anhand eines Vergleichs der 3D-Fußform des Kunden mit dem 3D-Innenraum des potentiellen Schuhs wie sie z.B. durch die Stuttgarter Firma corpus.e AG mit Hilfe eines 3D Schuhinnenraum-Scanners durchgeführt werden (siehe auch: R. Massen, D. Rutschmann: Kostengünstige und kalibrierungsfreie 3D-Digitalisierung von Füssen und Schuhinnenräumen. Orthopädie-Technik Ausgabe 9, 2009).

Alle derzeitigen einfachen Hilfen, welche die on-line Portale ihren Kunden anbieten, können zwei prinzipielle Schwierigkeiten des on-line Schuhhandels nicht zufriedenstellend lösen:
a) der Kunde kann den bestellten Schuh vorher nicht anprobieren
b) es fehlt das Gespräch mit dem geschulten Verkaufspersonal.

Infolge der Inkonsistenz der Schuhgrößen-Angaben zwischen den verschiedenen Herstellern und der weitgehenden Beschränkung auf lineare Dimensionen, welche lediglich das Fußbett beschreiben, ist es für den on-line Kunden sehr schwierig, zuverlässig die passenden Schuhe zu bestellen. Oft ist es erforderlich, die gelieferten Schuhe zu retournieren, ein Vorgang welcher mit erheblichen Kosten für den on-line Lieferanten verbunden ist und wenig zufriedenstellend für den Kunden bleibt.

Es ist daher nicht verwunderlich, dass zur Zeit das on-line Schuhgeschäft dadurch gekennzeichnet ist, dass eine große Zahl von bestellten und zum Kunden geschickten Schuhe wieder zum Schuhhändler zurück gesendet werden, da die Passform nicht stimmt.

Diese Retournierung ist extrem aufwendig, da neben den reinen Transportkosten die retournierten Schuhe personalintensiv ausgepackt, auf Beschädigung kontrolliert und wieder in die Lagerhaltung eingebracht werden müssen. Alle Vorteile eines weitgehend automatisch und elektronisch ablaufenden Bestellvorgangs werden dadurch zunichte gemacht.

Die heutigen Renditen beim on-line Schuhgeschäft sind daher bei den meisten Portalen noch negativ. Die Akteure auf diesem Markt nehmen diese Verluste derzeit in Kauf, um rechtzeitig im Internet präsent zu sein und um an dem erwarteten steigenden on-line Markt rechtzeitig teil zu nehmen.

Die US 5,339,252 offenbart ein Verfahren zur Auswahl eines an einen Fuß angepassten Schuhs aus einer Vielzahl von Schuhen. Für jeden Schuh wird ein maßgenauer Umriss des Fußbetts des Schuhs in elektronischer Form bereitgestellt. Ebenso wird für jeden Schuh ein maßgenauer Umriss eines Schnitts durch den Schuh bereitgestellt, wobei die Schnittebene senkrecht zum Fuß und entlang der Strecke der größten Fußlänge eines im Schuh positionierten Fußes verläuft. Der Fußbettumriss und der Schnittumriss für den Schuh werden auf einem Flachbildschirm dargestellt, wobei die Gestaltung der Umrissfläche im deutlichen Kontrast zur Gestaltung der Hintergrundfläche steht. Schließlich wird ein potentieller Erwerber zum visuellen Vergleich der dargestellten Umrisse mit dem zu bekleidenden Fuß durch Beurteilung des sichtbarbleibenden Randes des dargestellten Umrisses bezüglich Größe und Verlauf veranlasst.

Ferner ist aus der US 2009/0051683 A1 ein Verfahren und eine Anordnung zur Bestimmung der Form eines Fußes bekannt. Die so bestimmte Fußform kann dann zur Herstellung von Schuhen genutzt werden.

Nachteilig an den zuvor beschriebenen Verfahren und Anordnungen ist jedoch, dass sie aufwendige 3D Scanner, photogrammetrische 3D Fotografie, Hilfsmaßstäbe und anderes erfordern.

Es ist daher ein Verfahren notwendig, dass es ohne aufwendige Geräte beim Kunden diesem ermöglicht, eine Vorhersage darüber zu treffen, ob ihm gewünschte Schuhe passen werden.

Insbesondere wird nach einem einfachen und kostengünstigen Verfahren gesucht, mit welchem bei der on-line Bestellung von Schuhwerk Retouren aufgrund nicht passender Schuhe vermieden werden können.

Dieses Verfahren sollte ohne aufwendige Geräte wie 3D-Scanner, photogrammetrische 3D Photographie, Hilfsmaßstäbe usw. auskommen und angenehm und leicht auch vom unerfahrenen on-line Kunden zu Hause am normalen Rechner mit Internet-Zugang durchzuführen sein.

Dies wird mit dem Verfahren gemäß Anspruch 1 und der Anordnung gemäß Anspruch 14 erreicht und beruht, verkürzt beschrieben, auf dem durch den Kunden durchgeführten rein visuellen Vergleich des zu bekleidenden Fußes mit zwei Computer-Graphiken:
a) Vergleich der Fußsohlenform des Kunden mit einer auf dem Flachbildschirm eines Rechners maßstabsgetreu dargestellten Silhouette des Fußsohlenbettes eines zu prüfenden Schuhs
b) Vergleich der Seitenansicht des Fußes des Kunden mit einer auf dem Flachbildschirm eines Rechners maßstabsgetreu dargestellten Silhouette, welche die vertikale Schnittebene durch den Innenraum des zu prüfenden Schuhs wiedergibt, geschnitten entlang der Linie maximaler Fußlänge (Großzeh zu Ferse).

Das erfindungsgemäße Verfahren nützt die bei jedem Mensch verfügbare hohe visuelle Intelligenz beim Vergleich und der Beurteilung von graphischen Formen. Es nutzt dabei das inhärente visuelle Verständnis einer guten Passform auch beim wenig erfahrenen Kunden:

" Ein Schuhwerk passt, wenn bei Betrachtung des Fußbettes eine ausreichende Schuhlänge und ausreichend Freiraum im Zehenbereich vorhanden ist UND wenn im Bereich des Oberfußes ausreichende Höhe im gesamten vom Fuß eingenommenen Raum vorhanden ist, wobei die Ferse fest geführt an der Schuhinnenwand des Fersenbereiches anliegt.".

Gemäß Anspruch 1 umfasst das Verfahren das Bereitstellen eines maßgenauen Umrisses des Fußbettes für jeden Schuh aus einer Vielzahl von Schuhen, idealerweise also beispielsweise von allen Schuhen aus dem Angebot des online-Schuhgeschäfts. Die Rechner-gestützte Erstellung dieser Silhouette oder Umrisses ist Stand der Technik:
- jede Fußsohlen-Konstruktions-Software verfügt über Werkzeuge zur Gewinnung eines Fußbett-Umrisses.

Ferner umfasst das Verfahren das Bereitstellen eines maßgenauen Umrisses eines Schnitts durch den Schuh, wobei die Schnittebene senkrecht zum Fußbett und entlang der Strecke der größten Fußlänge eines im Schuh positionierten Fußes verläuft, ebenfalls für jeden Schuh aus einer Vielzahl von Schuhen, idealerweise also auch hier beispielsweise von allen Schuhen aus dem Angebot des online-Schuhgeschäfts.

Auch die Erstellung dieser Silhouette ist Stand der Technik:
- corpus.e AG hat unter der Bezeichnung "lightbeam®-inside" einen optischen Scanner zur Messung des 3D Innenraums von Schuhwerk entwickelt (siehe WO 2009/006989 A1 und US 7446 884 B2), welcher ein numerisches 3D Modell des Innenraums liefert. Aus diesem Modell kann durch eine entsprechend ausgerichtete Schnittebene dieser Schuhinnenform-Umriss erzeugt werden.

Die Umrisse werden maßstabsgetreu auf einem Flachbildschirm dargestellt. Die ggf. erforderliche vorhergehende geometrische Kalibrierung des Bildschirms ist bekannt. Die Firma Ricosta GmbH (www.ricosta.de) verwendet hierzu beispielsweise eine Bildschirmmaske, welche den Umriss einer CD darstellt. Der Kunde legt eine CD auf den Flachbildschirm und verstellt einen Schieberegler solange, bis das dargestellte Bild der CD mit dem Umriss der aufgelegten CD übereinstimmt.

Anschließend wird gemäß Anspruch 1 der Fuß auf bzw. vor dem Flachbildschirm positioniert, sodass möglichst nur ein umlaufender Rand des dargestellten Umrisses sichtbar bleibt. Der sichtbar bleibende Rand dient dem visuellen Vergleich zwischen Fußumriss und dargestelltem (Innen-)Schuhumriss.

Hier wird die visuelle Intelligenz des menschlichen Sehsystems ausgenutzt. Auch aus im photogrammetrischen Sinne unkalibrierten Aufnahmesituationen wie wechselnder Abstand, schräge Sicht usw. kann der Mensch Umrisse gut vergleichen und die spezifischen Formabweichungen leicht erkennen und beurteilen.

In einer bevorzugten Ausführungsform wird ein hoher Kontrast zwischen der Farbe der Umrissfläche und der Hintergrundfarbe gewählt, beispielsweise weiß und schwarz, damit die visuelle Wahrnehmungsfähigkeit des Menschen besser ausgenutzt wird.

Bevorzugter Weise ist der Randbereich der Umrisse des Fußbetts und/oder der Seitenansicht graphisch so gestaltet, dass ein visuell leicht zu interpretierender Eindruck über das Ausmaß der Abweichung zwischen dargestelltem Umriss und dem Umriss des Fußes entsteht. Das menschliche Wahrnehmungssystem kann noch weiter unterstützt werden, indem die graphische Gestaltung aus einem radial zum Umrissrand verlaufenden Farbverlauf besteht. Dies kann beispielsweise durch eine graphisch gestaltete Randzone geschehen, welche beispielsweise von einer neutralen, wenig auffälligen Farbe am Umrissrand zu einer auffälligen Farbe zur Mitte des Umrisses hin wechselt.

In einer Ausführungsform werden nur die anatomisch kritischen Bereiche wie Zehenbereich, Ballenbereich, Ferse graphisch durch Farbe und/oder Texturen so belegt, dass die visuell sichtbaren Bereiche umso auffälliger erscheinen, je größer die Fehlanpassung ist.

In einer Ausführungsform sind auf der Hintergrundfläche zusätzliche Informationsfelder und/oder Maßstäbe eingeblendet. Hierzu können mm-Maßstäbe zur Beurteilung der Größe der nicht-Passung, Rotations-Werkzeuge zur Ausrichtung der Silhouetten an der Fußposition vor dem Bildschirm, Silhouetten des Innenraums, welche entlang einer anderen Ausrichtung erstellt wurden, wie z.B. entlang einer Linie Ferse zu kleinem Zeh usw. gehören.

In einer Ausführungsform werden nach Art einer Dia-Show mehrere Umrisse verschiedener Schuhe in schneller Folge zeitlich nacheinander angezeigt, sodass sie mit dem nicht bewegten Fuß verglichen werden können und der Benutzer schnell die eindeutigen Fehlpassungen erkennen und ausschließen kann. In einer Ausführungsform können dabei für das gleiche Schuhmodell nacheinander die Umrisse für verschiedene Schuhgrößen angezeigt werden. In einer anderen Ausführungsform oder in einer anderen Betriebsart derselben Ausführungsform werden für die gleiche Schuhgröße Umrisse verschiedener Schuhmodelle angezeigt.

Ist der beim Kunden vorhandene Flachbildschirm kleiner als der zu bekleidende Fuß, so kann in einer Ausführungsform die Darstellung der Umrisse aufgeteilt werden in eine, welche dem vorderen Fußabschnitt entspricht und eine zweite, welche dem hinteren Fußabschnitt entspricht.

Diese Beschränkung ist in vielen Haushalten bedeutungslos geworden, weil in der Regel Fernseh-Flachbildschirme vorhanden sind, welche groß genug für alle Fußgrößen sind. Alle diese Fernseh-Flachbildschirme haben Rechnerschnittstellen und können daher für die Durchführung des Erfindungsgedanken eingesetzt werden.

Als Flachbildschirme können auch sogenannte Tablett-PCs benutzt werden, welche sämtliche benötigten Rechnerkomponenten inkl. Internetzugang in einem mobilen Gehäuse integrieren wie beispielsweise der IPAD Rechner der Fa. Apple, Cupertino, USA (www.apple.com/ipad). Diese haben flache Bildschirme, welche mobil sind, beliebig im Raum orientiert werden können und welche man nahe an den zu bekleidenden Fuß bringen und so ausrichten kann, dass der Betrachter gleichzeitig die Umrisse des Fußes und graphische Vorlagen auf dem Bildschirm visuell überlagern und in Form und Größe vergleichen kann.

In einer bevorzugten Ausführungsform wird zur Eingrenzung der geeigneten Schuhkandidaten vom Kunden mit einem Stift die Außenkontur des Fußes und die Außenkontur der Seitenansicht des Fußes nachgefahren und der so erstellte Umriss des zu bekleidenden Fußes erfasst und aufgrund dieses Umrisses eine Vorabauswahl von möglicherweise passenden Schuhen aus der Vielzahl von Schuhen getroffen wird. Diese Erfassung kann auf Papier erfolgen und dann eingescannt werden.

Vorzugsweise wird ein berührungsempfindlicher Bildschirm verwendet und direkt auf dem Bildschirm der Fuß nachgezeichnet, damit kann der EinscannVorgang entfallen.

Der Umriss wird der Datenbank bekannt gemacht. Damit kann der Suchraum in der Datenbank eingeschränkt werden auf solche Schuhkandidaten, deren Fußbett-Silhouette und Innenraum-Silhouette ähnlich genug sind zu dem zu bekleidenden Fuß, um eine ausreichende Passform überhaupt zu ermöglichen.

Wird ein berührungsempfindlicher Bildschirm eingesetzt, können auch über Stift- oder Fingerberührung Eingaben zur Berechnung von Abständen, zum Programmablauf usw. gemacht werden.

Das erfindungsgemäße Verfahren wird im Weiteren am Beispiel einer on-line Bestellung von Kinderschuhen erklärt. Dies ist nicht einschränkend zu verstehen sondern ermöglicht eine einfachere Beschreibung des Erfindergedankens und seiner Lehren. Hierbei wird auf folgende Figuren zurückgegriffen:
Figur 1 zeigt in einem Blockschaltbild die für die Durchführung des erfindungsgemäßen Verfahrens benötigte Anordnung;
Figuren 2a, 2b, 2c zeigen den Vergleich einer Fußsohle 14 mit maßstabsgetreu auf einem Flachbildschirm dargestellten Fußbett-Umrissen 20, 21 und 22 von drei verschiedenen in Frage kommenden Schuhen;
Figuren 3a, 3b, 3c zeigen den Vergleich einer Fußseitenansicht 15 mit maßstabsgetreu auf einem Flachbildschirm dargestellten Schnittumrisses von drei verschiedenen in Frage kommenden Schuhen, gemessen am Ort der größten Länge (Ferse zu großem Zeh);
Figur 4 zeigt einen Fußbettumriss in einer bevorzugten graphische Gestaltung;
Figur 5 zeigt eine erfindungsgemäße Anordnung für die Durchführung des Verfahrens in einem Schuhgeschäft für die Unterstützung des Verkaufspersonals.

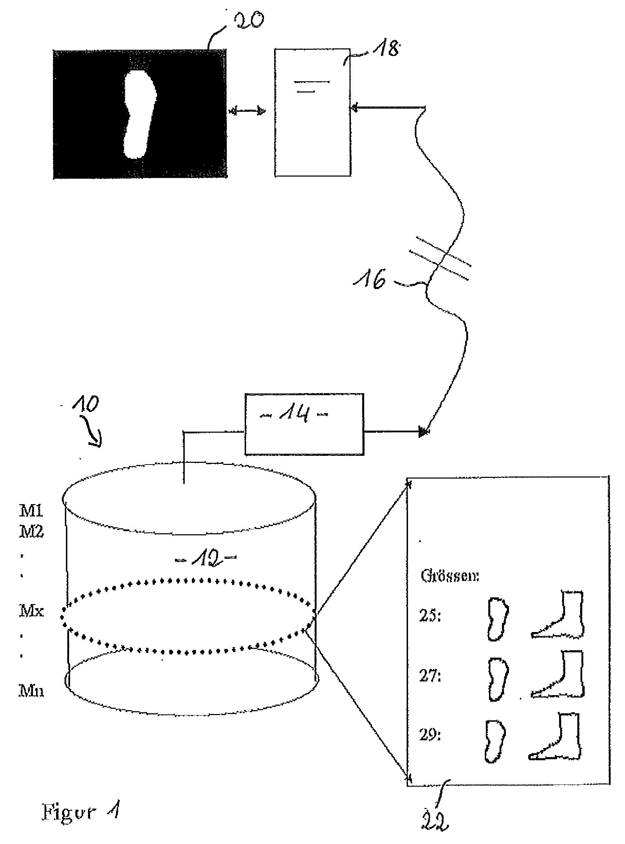

Figur 1 zeigt als Blockschaltbild eine erfindungsgemäße Anordnung, mit der das erfindungsgemäße Verfahren durchgeführt werden kann. Eine Datenverarbeitungsanlage 10 umfasst eine Datenbank 12 mit einer Ausgabeeinheit 14.

Die Ausgabeeinheit 14 ist an eine Übertragungsstrecke 16 angeschlossen, die beispielsweise Teil des Internets ist. Auf der Kundenseite ist die Übertragungsstrecke 16 angeschlossen an einen Rechner 18, der einen Flachbildschirm 20 aufweist bzw. mit diesem verbunden ist.

In der Datenbank 12 sind für jeden Schuh aus einer Vielzahl von Schuhen ein maßgenauer Umriss des Fußbetts und ein maßgenauer Umriss eines Schnitts durch den Schuh gespeichert, und zwar für jedes Schuhmodell in jeder Schuhgröße. Die hinterlegten Daten sind angedeutet mit den Buchstaben-Zahlenkombinationen M1 bis Mn. In einem Kasten 22 ist beispielhaft dargestellt, dass der Datensatz Mx für ein Schuhmodell für die Schuhgrößen 25, 27 und 29 jeweils einen Fußbett-Umriss und einen Schnittumriss enthält. Diese Umrissdaten können in eine bestehende Datenbank integriert sein, in der bereits die üblichen Daten für das jeweilige Schuhmodell wie textuelle Artikelbeschreibung und fotografische Illustrationen, sowie Preise abgelegt sind.

Der Schnittumriss ist erfindungsgemäß entlang einer Schnittebene erstellt, die senkrecht zum Fußbett und entlang der Strecke der größten Fußlänge eines im Schuh positionierten Fußes verläuft. Die Speicherung in der Datenbank 12 erfolgt in bekannter Weise in elektronischer, digitaler Form.

Die Ausgabeeinheit 14 ist so ausgestaltet, dass die in der Datenbank gespeicherten Umrisse so zu dem Endgerät 18 übertragen werden, dass eine maßstabsgetreue Anzeige der Umrisse auf dem Flachbildschirm 20 möglich ist.

Der Kunde nutzt den Rechner 18, der einen Anschluss an die Übertragungsstrecke, zum Beispiel einen Internetzugang hat. Der Rechner 18 ist mit dem flachen Bildschirm 20 ausgestattet, der vorzugsweise groß genug ist, um einem Fuß Platz zu bieten. In dem Fall, in dem der Bildschirm kleiner ist, wird die Umrissdarstellung in zwei Teile geteilt, einmal in den Vorderfußteil und einmal in den Hinterfußteil. Über die Übertragungsstrecke 16 werden zum Kunden, beispielsweise auf eine entsprechende Anforderung hin, die Umrisse eines ausgewählten Schuhmodells und einer ausgewählten Schuhgröße übertragen. In Figur 1 ist der Umriss eines Fußbettes eines Schuhs in Weiß auf einem schwarzen Hintergrund dargestellt. Ein deutlicher Kontrast zwischen Umrissfläche und Hintergrundfläche erleichtert die Erkennbarkeit von Abweichungen zwischen Fußform und Umriss für den Kunden.

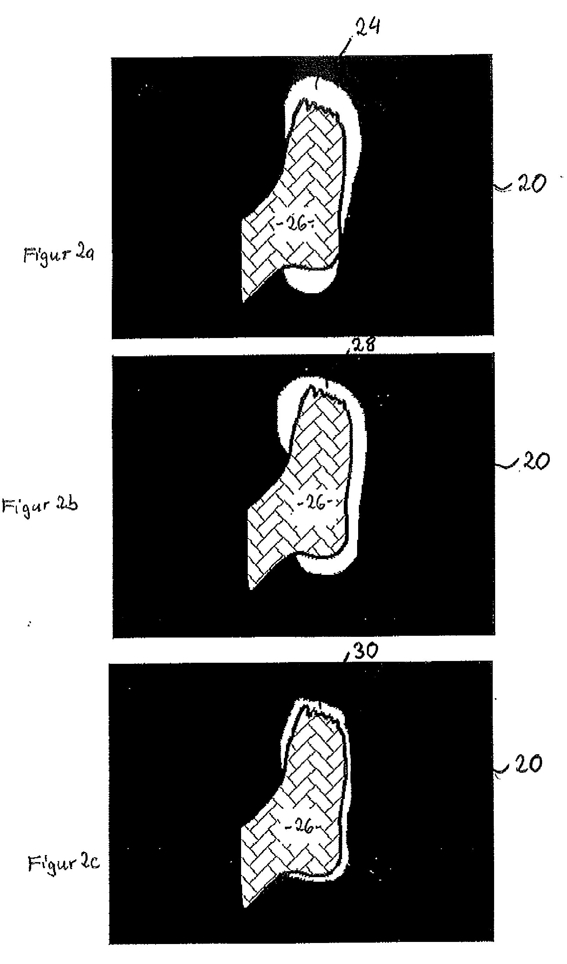

Figur 2 illustriert, wie die Auswahl eines an einen Fuß angepassten Schuhs aus einer Vielzahl von Schuhen zunächst für die Passgenauigkeit des Fußbettes erfolgt. Wie bereits im Zusammenhang mit Figur 1 erläutert, ist in der Datenbank 12 für jeden Schuh aus der Vielzahl von Schuhen ein maßgenauer Umriss des Fußbettes des Schuhs in elektronischer Form abgespeichert. Ebenso findet sich für jeden Schuh aus der Vielzahl von Schuhen ein maßgenauer Umriss eines Schnitts durch den Schuh, wobei die Schnittebene senkrecht zum Fußbett und entlang der Strecke der größten Fußlänge eines im Schuh positionierten Fußes verläuft.

Figur 2a zeigt die maßstabsgetreue Darstellung eines Fußbettumrisses 24 auf dem Flachbildschirm 20. Ein Fuß 26 ist auf dem Fußbettumriss positioniert, und zwar so, dass möglichst nur ein umlaufender Rand des dargestellten Umrisses sichtbar bleibt. In Figur 2a ist im Zehenbereich sehr viel vom dargestellten Umriss zu erkennen, ebenso im Fersenbereich. Dafür stößt der Fuß an der unteren Außenkante an den Umriss an. Der Schuh wird nicht passen.

In Figur 2b ist ein Fußbettumriss 28 eines anderen Schuhmodells dargestellt, auf dem der Fuß 26 positioniert ist. Auch hier zeigt sich kein in etwa gleichmäßiger schmaler umlaufender Rand des dargestellten Umrisses. Im Bereich der großen Zehe ist sehr viel vom Umriss zu erkennen. Insgesamt ist der sichtbare Rand zu breit für einen passgenauen Schuh.

Demgegenüber zeigt Figur 2c auf dem Bildschirm 20 einen Fußbettumriss 30 eines zu dem zu bekleidenden Fuß 26 passenden Schuhs. Der visuelle Vergleich des dargestellten Fußbettumrisses 30 mit dem zu bekleidenden Fuß 26 zeigt, dass nur ein schmaler in etwa gleichmäßiger Rand des dargestellten Umrisses sichtbar bleibt. Dieses Schuhmodell passt von der Form und Größe, soweit die Fußbettform betroffen ist.

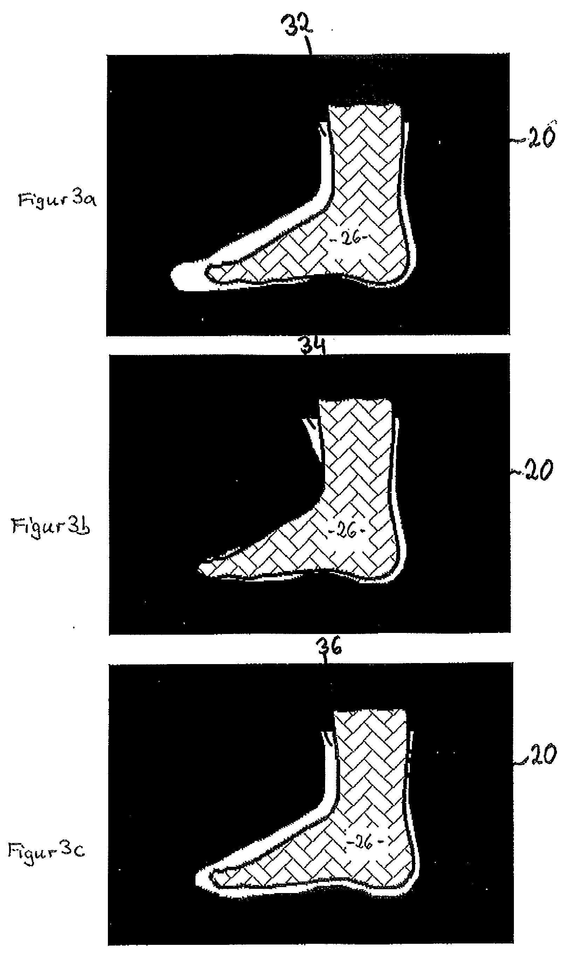

Erfindungsgemäß erfolgt jetzt noch ein Vergleich des zu bekleidenden Fußes mit dem maßgenauen Umriss eines Schnitts durch den Innenschuh. Dieser Schritt wird anhand der Figuren 3a bis 3c erläutert.

Figur 3a zeigt den Vergleich des Fußes 26 mit einem Schnittumriss 32, der auf dem Flachbildschirm 20 dargestellt ist. Die visuelle Interpretation ist auch für den Laien einfach. Der Schuh, dessen Schnittumriss 32 dargestellt ist, ist zu lang und zu hoch.

Figur 3b zeigt auf dem Flachbildschirm 20 einen Seiten- oder Schnittumriss 34 eines anderen Schuhs für den gleichen Fuß 26. Auch hier ist die Interpretation offensichtlich. Der Schuh, zu dem die dargestellte Seitenansicht 34 gehört, ist zu kurz und der Innenraum im Bereich des Übergangs von Vorderfuß zu Bein zu eng.

Figur 3c zeigt demgegenüber einen Schnittumriss 36 eines passenden Schuhs. Es ist ausreichender Freiraum im Zehenbereich vorhanden und die Passung an die Ferse hat sowohl den richtigen Formverlauf als auch einen genügenden Freiraum zur Innenschuhwand.

Selbstverständlich hätte in dem Fall, in dem eine Übereinstimmung mit dem Fußbettumriss gemäß Figur 2c gegeben ist, der Kunde zunächst den Seitenumriss für diesen Schuh betrachtet. Ist bei dieser Prüfung das Resultat so wie in Figur 3c dargestellt, so ist ein passgenauer Schuh gefunden.

Die visuelle Überprüfung der Passform ist damit leicht und ohne große Schulung durch den Kunden durchführbar, da sie ein allgemein zumindest in der erwachsenen Bevölkerung vorhandenes Basiswissen der Fußanatomie und der Schuhpassform ausnutzt, mit welcher jeder Mensch, der in seinem Leben bereits Schuhe gekauft hat, konfrontiert wurde:

"Ein Schuhwerk passt, wenn bei Betrachtung des Fußbettes eine ausreichende Schuhlänge und ausreichend Freiraum im Zehenbereich vorhanden ist UND wenn im Bereich des Oberfußes ausreichende Höhe im gesamten vom Fuß eingenommenen Schuhinnenraum vorhanden ist, wobei die Ferse eher fest geführt an der Schuhinnenwand des Fersenbereiches anliegt.".

Dieses Basiswissen kann aber auch über die on-line Verbindung zum Schuhportal in Form eines Lehrfilms o.ä. gelernt werden.

Insbesondere erlaubt es das erfindungsgemäße Verfahren auch, eine Anpassungs-Kontrolle getrennt für den linken und den rechten Fuß durchzuführen und damit für die recht große Zahl an Kunden, welche links und rechts eine unterschiedliche Schuhgröße und -form haben, einen für jeden Fuß passenden Schuh on-line zu bestellen.

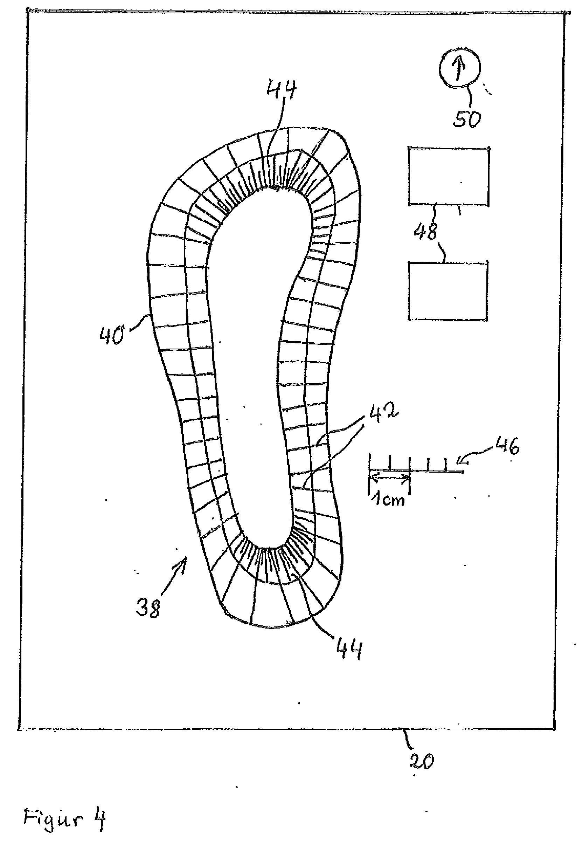

Figur 4 zeigt eine bevorzugte Darstellung eines Fußbettumrisses 38 auf dem Flachbildschirm 20. Es sollte aus der bereits gegebenen Beschreibung klar sein, dass die Hintergrundfläche wiederum in Schwarz gehalten sein sollte, jedenfalls in deutlichem Kontrast zum Umriss 38. Für die Erkennbarkeit der Bezugzeichen wurde in Figur 4 auf eine Schwarzfärbung verzichtet.

Der Randbereich des Fußbettumrisses 38 ist graphisch gestaltet, so dass der Kunde leichter erkennen kann, ob der sichtbare Randbereich in einer optimalen Größenordnung liegt oder der Fußbettumriss schon zu groß ist, d.h. ein zu großer Randstreifen sichtbar bleibt, wenn ein in Figur 4 nicht dargestellter Fuß darauf positioniert wird. Es entsteht so ein visuell leicht zu interpretierender Eindruck über das Ausmaß der Abweichung. Im Umriss 38 ist eine radial zum Umrissrand 40 verlaufende Textur vorgesehen, die hier beispielhaft aus Strichen 42 besteht, wobei die Textur mit wachsendem Abstand vom Umrissrand 40 einen intensiveren visuellen Eindruck hervorruft, im Beispiel ist der Strichabstand verringert. Damit erscheinen große Abweichungen zwischen dargestelltem Umriss und Fußumriss intensiver als kleinere. Dieser Verlaufsbereich ist auf eine streifenförmige Randzone des Umrisses begrenzt. Andere Texturen oder aber auch die Verwendung von Farbverläufen sind möglich. Weitere den visuellen Formvergleich von Fußumriss und Silhouette unterstützenden graphische Ausgestaltungen sind Stand des graphisch-künstlerischen Designs und damit dem Fachmann bekannt. Die graphische Randdarstellung ist selbstverständlich auch auf dien Schnittumrisse übertragbar.

Wie in Figur 4 dargestellt können Zonen 44, die besonders kritisch sind für die Passgenauigkeit von Schuhen, z.B. der Zehenbereich und der Fersenbereich, eine andere Textur aufweisen, so dass Fehlanpassungen in diesem Bereich besonders deutlich hervortreten. In Figur 4 wurde der Strichabstand beispielhaft nochmals verringert.

Vorteilhafter Weise können auf dem Bildschirm 20 gleichzeitig noch weitere Bedien- oder Informationsfelder eingeblendet sein. Beispielhaft ist ein Maßstab 46 gezeigt, sowie Felder 48, mit denen z.B. wie nachstehend erläutert verschiedene Betriebsarten gewählt werden können. Auch die Einspielung eines kleinen Fotos des gerade "anprobierten" Schuhs ist denkbar und die Möglichkeit, ein Rotationswerkzeug anzubieten.

Um den Auswahlvorgang für passgenaue Schuhe zu beschleunigen, gibt es im bevorzugten Ausführungsbeispiel eine Betriebsart, in der automatisch nacheinander maßstabsgetreue Umriss-Darstellungen zu Schuhen des gleichen Schuhmodells mit unterschiedlichen Schuhgrößen angezeigt werden. In einer anderen Betriebsart, die alternativ oder zusätzlich vorgesehen sein kann, werden nacheinander maßstabsgetreue Umriss-Darstellungen zu Schuhen der gleichen Schuhgröße, aber zu unterschiedlichen Schuhmodellen gehörend angezeigt. Diese verschiedenen Betriebsarten können beispielsweise über die in der Hintergrundfläche eingeblendeten Informationsfelder 48 ausgewählt werden. Damit der Kunde sich beim Ausrichten seines Fußes nicht unnötig verrenken muss, können Rotationswerkzeuge 50 vorgesehen sein, die eine Ausrichtung der Umrisse an der Fußposition vor dem Bildschirm ermöglichen.

Um sicherzustellen, dass Kunden eines Online-Schuhgeschäftes auch tatsächlich die Möglichkeiten der passgenauen Auswahl von Schuhen nutzen, kann das Abschicken einer Bestellung damit gekoppelt sein, dass die Umrisse des entsprechenden Schuhs angezeigt worden sein müssen. Anderenfalls ist das Absenden der Bestellung blockiert.

Bei hochhackigen Damenschuhen kann es beim Vergleich der Fußseitenansicht mit dem Schnittumriss des Innenschuhs notwendig sein, dass der Kunde seinen Fuß in die später im Schuh eingenommene Position bringt, das heißt in etwa auf Zehen steht. Es ist vorteilhaft, dass so der Vergleich in der tatsächlich später eingenommenen Position stattfindet, da aus einer Ruheposition eines Fußes nicht ohne weiteres auf die Form des Fußes in beispielsweise einem hochhackigen Schuh geschlossen werden kann.

Bei einer sehr großen vorhandenen Auswahl von Schuhen mit sehr unterschiedlichen Schuhmodellen und von Hersteller zu Hersteller schwankenden Größenzuordnungen zur Fußlänge kann der Auswahlprozess relativ lang werden, da sich der Kunde durch viele Schuhmodelle und Schuhgrößen durchklicken muss, bis er etwas passendes findet.

In einer bevorzugten Ausführungsform wird daher der Suchraum in der Datenbank eingeschränkt, indem zuvor der Umriss des zu bekleidenden Fußes eingegeben wird. In der bevorzugten Ausführungsform wird hierzu beim Kunden ein berührungsempfindlicher Bildschirm verwendet, der genügend groß ist für einen Fuß. Mit einem Stift oder dem Finger wird der auf dem Bildschirm positionierte Fuß in seinem Umriss nachgezeichnet und dieser Umriss von der Datenverarbeitungsanlage ausgewertet und zur Einschränkung des Suchraums in der Datenbank verwendet. Alternativ, wenn kein berührungsempfindlicher Bildschirm vorhanden ist, kann auch in bekannter Weise der Fuß auf ein Blatt Papier gestellt werden und die Umrisslinie mit einem Stift nachgefahren werden. Der so erhaltene Umriss kann dann über einen Einscannvorgang in eine elektronische Form umgewandelt und der Datenverarbeitungsanlage übermittelt werden, ggfs mit einer Bemaßung.

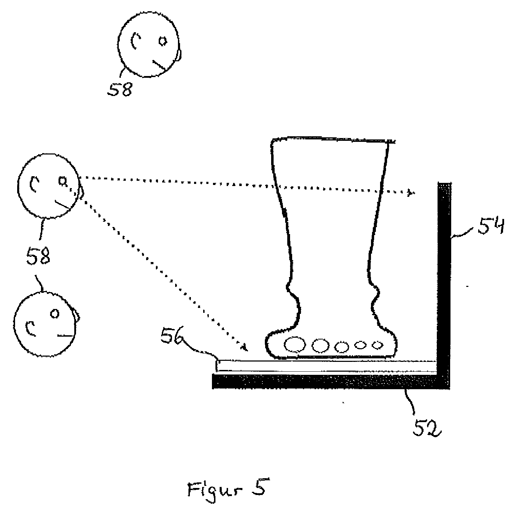

Figur 5 zeigt eine erfindungsgemäße Anordnung für die Durchführung des Verfahrens in einem Schuhgeschäft zur Unterstützung des Verkaufspersonals. Der Kunde steht auf einer Anordnung von zwei rechtwinklig zueinander angeordneten Flachbildschirmen 52 und 54, wobei der horizontale Bildschirm 52 durch eine starke Glasplatte 56 geschützt ist. Auch eine Kunststoffplatte ist möglich, solange sie transparent ist und den darunterliegenden Bildschirm sicher schützt. Der vertikale Bildschirm 54 ist für die Darstellung des Umrisses des Längsschnittes durch den Innenraum eines Schuhs vorgesehen. Der waagrecht angeordnete Bildschirm 52 zeigt jeweils gleichzeitig für den gleichen Schuh den Fußbettumriss. Die beiden Umrisse sind so zueinander angeordnet, dass das Verkaufspersonal, symbolisiert durch Köpfe 58, sowohl den Vergleich der Fußseitenansicht mit dem Schnittumriss als auch den Vergleich zwischen Fußbettumriss und Fußumriss durchführen kann, ohne dass sich der Kunde bewegen muss. Aus einer mittleren Position heraus beobachtet das Verkaufspersonal dabei die Überlagerung der Fußseitenansicht mit dem Schnittumriss und aus einer steileren Sichtposition beobachtet es die Formpassung der Fußumrandung mit der auf dem Bildschirm 52 dargestellten Fußbettsilhouette. Die Glasplatte 56 hat einen möglichst geringen Abstand zu dem Flachbildschirm 52, damit bei der Betrachtung kein Parallelversatz zu bemerken ist. Sie ist so dick gewählt, dass sie sich nicht durchbiegt und das Gewicht des Kunden aushält.

Damit wird mit einem bescheidenen technischen Aufwand das Verkaufspersonal wirksam bei der Bestimmung eines passenden Schuhs unterstützt und zumindest die Anzahl der auszuprobierenden Schuhe deutlich gesenkt. Damit ist die Lehre des Erfindungsgedanken in der Lage, die Produktivität und die Beratungsqualität des Verkaufspersonals mit einem sehr niedrigen gerätetechnischen Aufwand zu steigern.

Die benötigten Daten sind vorzugsweise wie beim on-line Geschäft auf einem externen Server abgelegt, auf welchen das Verkaufspersonal ebenfalls on-line zugreift. Die Anordnung ermöglicht es auch, dem Kunden im Schuhgeschäft zusätzlich Schuhe aus einem Katalog anzubieten, die nicht vorrätig sind.

Zusammenfassend ist festzuhalten, dass Kunden, die bei einer Online-Schuhbestellung weder die Schuhe anprobieren können noch ein qualitativ hochwertiges Gespräch mit geschultem Verkaufspersonal führen können, durch die Bereitstellung sowohl eines Fußbettumrisses als auch eines Seitenumrisses zusätzliche Forminformationen über den Unterschied zwischen der Form des Schuhinnenraums und der Form des zu bekleidenden Fußes in einer von ihnen leicht zu bewertenden Form erhalten, aus der sie den Passgrad gut extrapolieren können. Denn eine gute Passform erfordert neben der Beschreibung des Fußbettes auch eine Information über die Anpassung des Innenschuhraumes an den Fuß. Kunden in einem Schuhgeschäft können die Anzahl anzuprobierender Schuhe reduzieren oder zusätzlich auf ein Katalogangebot zurückgreifen.

Es sind keine vollständigen 3D-Information erforderlich, sondern es reichen bereits zwei zweidimensionale Umrisse des spezifischen Schuhs aus, nämlich der Fußbettumriss und der bereits diskutierte Schnittumriss.

Grundsätzlich für den Erfindungsgedanken ist, dass der (on-line) Kunde keinerlei Hilfswerkzeuge wie ausgedruckte Fußsohlen-Schablonen, Bandmaß, einfache Schieblehren zur Ausmessung der Fußlänge in bisher getragenen Schuhen etc. benötigt.

Der Erfindungsgedanken beschränkt sich auch nicht nur auf die Auswahl der besten Passform für Straßenschuhe, sondern sämtliche Arten von Schuhwerk wie Sportschuhe, orthopädische Schuhe etc. sind mit umfasst.

Soll das zu bestellende Schuhwerk mit einem bestimmten Strumpf/Socken getragen werden, so wird nicht der Umriss des unbekleideten Fußes mit den beiden Bildschirmsilhouetten verglichen, sondern der entsprechend bekleidete Fuß.

## Patentansprüche

1. Verfahren zur Auswahl eines an einen Fuß (26) angepassten Schuhs aus einer Vielzahl von Schuhen, wobei das Verfahren folgendes umfasst:
- für jeden Schuh aus der Vielzahl von Schuhen erfolgendes Bereitstellen eines maßgenauen Umrisses (30) des Fußbetts des Schuhs in elektronischer Form;
- für jeden Schuh aus der Vielzahl von Schuhen erfolgendes Bereitstellen eines maßgenauen Umrisses (32) eines Schnitts durch den Schuh, wobei die Schnittebene senkrecht zum Fußbett und entlang der Strecke der größten Fußlänge eines im Schuh positionierten Fußes verläuft in elektronischer Form;
- Darstellung des Fußbettumrisses (30) und des Schnittumrisses (32) für einen Schuh auf einem Flachbildschirm (20), wobei die Gestaltung der Umrissfläche in deutlichem Kontrast zur Gestaltung der Hintergrundfläche steht;
- Veranlassung des potentiellen Erwerbers zum visuellen Vergleich der dargestellten Umrisse (30, 36) mit dem zu bekleidenden Fuß (26) durch Beurteilung des sichtbarbleibenden Randes des dargestellten Umrisses (30, 36) bezüglich Größe und Verlauf, **dadurch gekennzeichnet, dass**
- die Darstellung des Fußbettumrisses (30) und des Schnittumrisses (36) für den Schuh auf dem Flachbildschirm (20) maßstabsgetreu erfolgt, und durch Veranlassung eines potentiellen Erwerbers zum Positionieren des Fußes (26) auf bzw. vor dem Flachbildschirm (20), sodass möglichst nur ein umlaufender Rand des dargestellten Umrisses (30, 36) sichtbar bleibt.

2. Verfahren nach Anspruch 1, wobei die Umrissfläche (30, 36) auf dem Bildschirm (20) hell, vorzugsweise weiß dargestellt wird und die Hintergrundfläche dunkel, vorzugweise schwarz dargestellt wird.

3. Verfahren nach Anspruch 1 oder 2, wobei der Randbereich der Umrisse des Fußbetts (30) und/oder der Seitenansicht des Innenschuhs (36) graphisch so gestaltet ist, dass ein visuell leicht zu interpretierender Eindruck über das Ausmaß der Abweichung zwischen dargestelltem Umriss (30, 36) und dem Umriss des Fußes (26) entsteht.

4. Verfahren nach Anspruch 3, wobei die graphische Gestaltung aus einem radial zum Umrissrand verlaufenden Farbverlauf besteht, bei welchem mit wachsendem Abstand die Farbe einen intensiveren visuellen Eindruck hervorruft, sodass große Abweichungen zwischen dargestelltem Umriss (30, 36) und Fußumriss (26) intensiver erscheinen als kleinere und dass dieser Verlaufsbereich auf eine streifenförmige Randzone des Umrisses (30, 36) begrenzt ist.

5. Verfahren nach Anspruch 3, wobei die graphische Gestaltung aus einer radial zum Umrissrand (40) verlaufenden Textur besteht, wobei die Textur mit wachsendem Abstand einen intensiveren visuellen Eindruck hervorruft, sodass große Abweichungen zwischen dargestelltem Umriss (38) und Fußumriss intensiver erscheinen als kleinere und dass dieser Verlaufsbereich auf eine streifenförmige Randzone des Umrisses (38) begrenzt ist.

6. Verfahren nach einem der vorstehenden Ansprüche, wobei auf der Hintergrundfläche zusätzliche Informationsfelder (48) und/oder Maßstäbe (46) eingeblendet sind.

7. Verfahren nach einem der vorstehenden Ansprüche wobei automatisch zeitlich nacheinander maßstabsgetreue Darstellungen des Fußbettumrisses (30) und des Schnittumrisses (36) für mehrere Schuhe auf dem Flachbildschirm dargestellt werden.

8. Verfahren nach Anspruch 7, wobei die automatisch nacheinander angezeigten maßstabsgetreuen Darstellungen zu Schuhen des gleichen Schuhmodells mit unterschiedlicher Schuhgröße gehören und/oder zu Schuhen der gleichen Schuhgröße aber unterschiedlichen Schuh-Modellen gehören.

9. Verfahren nach einem der vorstehenden Ansprüche, wobei für Füße (26), welche größer sind als die Fläche des Flachbildschirms (20), die Darstellung der Umrisse (30, 36, 38) aufgeteilt wird in eine, welche dem vorderen Fußabschnitt entspricht und eine zweite, welche dem hinteren Fußabschnitt entspricht.

10. Verfahren nach einem der vorstehenden Ansprüche, wobei die maßstabsgetreuen Darstellungen der Umrisse (30, 36,38) auf einer Internetseite eines online-Verkäufers bereitgestellt werden, und eine Bestellung nur abgeschickt werden kann, wenn die Umrisse (30, 36, 38) des bestellten Schuhs in der bestellten Schuhgröße zuvor dargestellt worden sind.

11. Verfahren nach Anspruch 10, wobei Basiswissen zur Beurteilung der Passform über einen visuellen Vergleich der Fußumrisse mit den dargestellten Umrissen (30, 36, 38) über ein Internet-Tutorial gelernt und/oder geübt werden kann.

12. Verfahren nach einem der vorstehenden Ansprüche, wobei ein Umriss des zu bekleidenden Fußes (26) erfasst wird und aufgrund dieses Umrisses eine Vorabauswahl von möglicherweise passenden Schuhen aus der Vielzahl von Schuhen getroffen wird.

13. Verfahren nach Anspruch 12, wobei der Umriss des zu bekleidenden Fußes (26) durch Nachfahren des Fußumrisses mit dem Finger oder einem Stift auf einem berührungsempfindlichen Bildschirm erfasst wird.

## Claims

1. A method of selecting a shoe fitted to a foot (26) from a plurality of shoes, the method comprising the following:
- providing a dimensionally accurate outline (30) of the footbed of the shoe for each shoe from the plurality of shoes, in electronic form;
- providing a dimensionally accurate outline (32) of a section through the shoe for each shoe from the plurality of shoes, wherein the sectional plane runs perpendicularly to the footbed and along the way of the largest foot length of a foot positioned in the shoe, in electronic form;
- representation of the footbed outline (30) and of the section outline (32) for a shoe on a flat screen (20), wherein the design of the outline area is in distinct contrast to the design of the background area;
- causing the potential purchaser to visually compare the represented outlines (30, 36) with the foot (26) to be dressed by assessing the edge that remains visible of the represented outline (30, 36) with respect to size and course, **characterized in that**
- the representation of the footbed outline (30) and of the section outline (36) for the shoe on the flat screen (20) is effected to scale, and by causing a potential purchaser to position the foot (26) on or in front of the flat screen (20), so that, if possible, only a circumferential edge of the represented outline (30, 36) remains visible.

2. The method according to claim 1, wherein the outline area (30, 36) is represented bright, preferably white, and the background area is represented dark, preferably black, on the screen (20).

3. The method according to claim 1 or 2, wherein the edge region of the outlines of the footbed (30) and/or of the side view of the inner shoe (36) is graphically designed such that an impression that is visually easy to interpret, of the extent of the deviation between the represented outline (30, 36) and the outline of the foot (26) arises.

4. The method according to claim 3, wherein the graphical design consists of a color gradient proceeding radially to the outline edge, in which the color produces a more intensive visual impression with increasing distance, such that large deviations between the represented outline (30, 36) and the foot outline (26) appear more intensive than smaller ones, and that this gradient region is limited to a strip-shaped edge zone of the outline (30, 36).

5. The method according to claim 3, wherein the graphical design consists of a texture proceeding radially to the outline edge (40), wherein the texture produces a more intensive visual impression with increasing distance, such that large deviations between the represented outline (38) and the foot outline appear more intensive than smaller ones, and that this gradient region is limited to a strip-shaped edge zone of the outline (38).

6. The method according to any of the preceding claims, wherein additional information fields (48) and/or scales (46) are superimposed on the background area.

7. The method according to any of the preceding claims, wherein representations, to scale, of the footbed outline (30) and of the section outline (36) are automatically represented on the flat screen consecutively in time for several shoes.

8. The method according to claim 7, wherein the representations to scale that are automatically consecutively displayed are associated with shoes of the same shoe model with different shoe sizes and/or are associated with shoes of the same shoe size, but different shoe models.

9. The method according to any of the preceding claims, wherein for feet (26) that are larger than the area of the flat screen (20), the representation of the outlines (30, 36, 38) is split in one corresponding to the front foot portion and a second one corresponding to the rear foot portion.

10. The method according to any of the preceding claims, wherein the representations, to scale, of the outlines (30, 36, 38) are provided on an Internet site of an online seller, and an order can only be submitted if the outlines (30, 36, 38) of the ordered shoe have previously been represented in the ordered shoe size.

11. The method according to claim 10, wherein a basic knowledge for assessing the fit by means of a visual comparison of the foot outlines with the represented outlines (30, 36, 38) can be learned and/or trained via an Internet tutorial.

12. The method according to any of the preceding claims, wherein an outline of the foot (26) to be dressed is acquired and, based on this outline, a preselection of possibly fitting shoes from the plurality of shoes is made.

13. The method according to claim 12, wherein the outline of the foot (26) to be dressed is acquired by tracing the foot outline with the finger or a stylus on a touch-sensitive screen.

## Revendications

1. Procédé pour le choix d'une chaussure adaptée à un pied (26) parmi une pluralité de chaussures, le procédé comprenant les étapes suivantes :
- un contour (30) à dimensions exactes de l'assise plantaire de la chaussure est fourni sous forme électronique pour chaque chaussure parmi la pluralité de chaussures,
- un contour (32) à dimensions exactes d'une coupe à travers la chaussure est fourni sous forme électronique pour chaque chaussure parmi la pluralité de chaussures, le plan de coupe s'étendant perpendiculairement à l'assise plantaire et le long du parcours de la plus grande longueur de pied d'un pied positionné dans la chaussure,
- le contour (30) de l'assise plantaire et le contour (32) de la coupe pour une chaussure sont représentés sur un écran plat (20), la conception de la surface de contour faisant un net contraste avec la conception de la surface de fond,
- un acheteur potentiel est amené à comparer visuellement les contours (30, 36) représentés avec le pied (26) à vêtir en évaluant le bord restant visible du contour (30, 36) représenté quant à la taille et au cours, **caractérisé en ce que**
- la représentation du contour (30) de l'assise plantaire et du contour (36) de la coupe pour la chaussure est effectuée à l'échelle sur l'écran plat (20) et en amenant un acheteur potentiel à positionner le pied (26) sur ou devant l'écran plat (20) de sorte que si possible, seul un bord circonférentiel du contour (30, 36) représenté reste visible.

2. Procédé selon la revendication 1, dans lequel la surface du contour (30, 36) sur l'écran (20) est représentée de manière claire et de préférence en blanc et la surface de fond est représentée de manière sombre, de préférence en noir.

3. Procédé selon la revendication 1 ou 2, dans lequel la zone de bord des contours de l'assise plantaire (30) et/ou de la vue latérale de la chaussure intérieure (36) est conçue graphiquement de telle sorte qu'il en résulte une impression facile à interpréter visuellement de l'étendue de la différence entre le contour (30, 36) représenté et le contour du pied (26).

4. Procédé selon la revendication 3, dans lequel la conception graphique est constituée d'un dégradé de couleur s'étendant radialement vers le bord du contour et dans lequel la couleur produit une impression visuelle plus intense à mesure que la distance augmente, de sorte que de grandes différences entre le contour (30, 36) représenté et le contour du pied (26) apparaissent de manière plus intense que des petites différences, et que cette région de dégradé est limitée à une zone de bord en bande du contour (30, 36).

5. Procédé selon la revendication 3, dans lequel la conception graphique est constituée d'une texture s'étendant radialement vers le bord de contour (40), la texture produisant une impression visuelle plus intense à mesure que la distance augmente, de sorte que de grandes différences entre le contour (38) représenté et le contour du pied apparaissent de manière plus intense que des petites différences, et que cette région de dégradé est limitée à une zone de bord en bande du contour (38).

6. Procédé selon l'une des revendications précédentes, dans lequel des champs d'information (48) et/ou des échelles (46) additionnel(le)s sont affiché(e)s sur la surface de fond.

7. Procédé selon l'une des revendications précédentes, dans lequel des représentations à l'échelle du contour (30) de l'assise plantaire et du contour de coupe (36) sont automatiquement représentées sur l'écran plat les unes après les autres dans le temps pour plusieurs chaussures.

8. Procédé selon la revendication 7, dans lequel les représentations à l'échelle automatiquement affichées les unes après les autres appartiennent à des chaussures du même modèle de chaussure dans différentes pointures et/ou appartiennent à des chaussures de la même pointure mais de différents modèles de chaussure.

9. Procédé selon l'une des revendications précédentes, dans lequel pour des pieds (26) qui sont plus grands que la surface de l'écran plat (20), la représentation des contours (30, 36, 38) est divisée en une représentation correspondant au tronçon de pied avant et une deuxième représentation correspondant au tronçon de pied arrière.

10. Procédé selon l'une des revendications précédentes, dans lequel les représentations à l'échelle des contours (30, 36, 38) sont mises sur une page Internet d'un vendeur en ligne et une commande peut uniquement être passée si les contours (30, 36, 38) de la chaussure commandée ont été préalablement représentés dans la pointure commandée.

11. Procédé selon la revendication 10, dans lequel les connaissances de base pour l'évaluation de l'ajustement par une comparaison visuelle du contour du pied avec les contours (30, 36, 38) représentés peuvent être acquises et/ou entraînées au moyen d'un tutoriel par Internet.

12. Procédé selon l'une des revendications précédentes, dans lequel un contour du pied (26) à vêtir est saisi et une présélection de chaussures qui conviennent éventuellement parmi la pluralité de chaussures est effectuée sur la base de ce contour.

13. Procédé selon la revendication 12, dans lequel le contour du pied (26) à vêtir est saisi en suivant le contour du pied avec le doigt ou avec un stylet sur un écran tactile.
